# EUROPEAN PATENT APPLICATION

(11) **EP 0 945 723 A1**
(43) Date of publication of application: **29.09.1999**
(21) Application number: 99200904.3
(22) Date of filing: 24.03.1999
(51) Int. Cl.: G01N 27/12

(54) **Process for preparing electro-conductive polymer films by doping neutral polymers**

(30) Priority: 26.03.1998 IT PI980024
(71) Applicant: De Rossi, Danilo, 56017 San Giuliano Terme - PI (IT); Serra, Giorgio, 56023 Titignano, Cascina - PI (IT)
(72) Inventor: De Rossi, Danilo, 56017 San Giuliano Terme - PI (IT); Serra, Giorgio, 56023 Titignano, Cascina - PI (IT)
(74) Representative: Celestino, Marco

(57) **Abstract**

Process for preparing films of electroconductive polymers by treatment of neutral polymers with doping agents and sensors of chemical substances obtained with such films. The sensors can be in particular conducting π-conjugated polymer chemi-resistors made chemically and having high sensitivity to vapours of organic substances. The sensors consist of a film of conducting polymer that can be laid with known techniques onto insulating supports starting from a stable suspension in organic solvents. The suspension is obtained by neutral preformed π-conjugated polymers dissolved in organic solvents with addition of small and suitable amount of dopant diluted in organic solutions. The conducting film that is obtained directly for evaporation of the solvents from the suspension deposited onto the supports, is mechanically compact, strong, stable and adhesive with electrical conductivity of about 10⁻³-10⁻⁵ S/cm. The sensors are reproducible in electrical resistance and in type of response versus variation of resistance ratio ΔR/R% and the response is reversible in a few seconds. The method of production of the sensors is simple, quick and not expensive and is suitable for industrial application; also the system for detecting the signal is simple and not expensive being an electrical resistance measure.

## Description

### Field of the invention

The present invention relates to a process for preparing films of electro-conductive polymers through treatment of neutral polymers with doping agents and sensors of chemical substances obtained with these films.

In particular, the invention relates to the production of chemi-resistors with conducting polymers of the type π-conjugated, obtained by chemical doping of the relative preformed neutral polymers. The resulting doped polymers are very sensitive to vapour of organic substances and gas and can be used in many fields such as in particular for the so-called electronic noses.

### Description of the state of the art

Sensors for detecting organic substances in vapour phase or inorganic gaseous molecules are known in the relevant literature and relate to solutions that work according to many different principles and/or with different methods of signal measurement.

*Sintered metal OXIDES*: they are chemi-resistors made of metal oxides deposited on a platinum wire that is used as heating element. Normally they are made of SnO₂ doped with precious metals in order to work as an n-type semiconductor in which the organic vapour reacting with the oxygen chemically adsorbed in the lattice causes a resistivity variation (K.D.Schierbaum et al., Multi-component Gas Analysis: to analytical Chemistry Approach Applied Modified SₙO₂ Sensors, Sensors and Actuators B, 2 (1990) 71-78). There are some combustible gas sensitive sensors such as CO, H₂, CH₄ and ethanol and sensors for other industrial substances such as NH₃, H₂S, propylene, butylene, NOₓ, SOx and freon. They require high working temperature 300-600C° and dissipate a power of about 1W, the response time is about a few seconds, whereas the minimum sensitivity is about 1ppm (parts per million). Arrays of metal oxide sensors have also been developed with silicon technologies that dissipate lower power (80mW and 300C°) with different dopants such as ruthenium and iridium (J.W. Gardner et al., Integrated Array Sensors for Detecting Organic Solvents, Sensors and Actuators B, 26-27(1995) 135-139).

*Phtalocyanine films*: they are used for another type of chemi-resistor and they are sensitive to oxidising or reducing gases such as NO₂, HCl and CO up to 1 ppm. The phtalocyanine film can be deposited on supports by microelectronics technologies, i.e. by evaporation under vacuum or by deposition of multi-layers (≈50) of monomolecular film (Langmuir Blodgett), with the spin coating and autoassembly techniques (T.R.E. Simpson et al., Formation and Characterisation to Self-Assembled Phtalocyanine Monolayer suitable For Gas Sensing, Sensors and Actuators 29(1995) 353-357). In all cases the resulting films have high electrical resistance whereby the signal detection is troublesome and furthermore they operate at ≈200C° whereby they are energy consuming. Their use is limited to detection of harmful redox gases.

*Mass variation sensors*: they use a crystal of quartz that oscillates with a predetermined frequency and is covered by known techniques by a gas or vapour adsorbing material. Since the absorption of the analyte causes a mass increase of the oscillating system there is a consequent decrease of the frequency of oscillation; this frequency shift can be correlated to the adsorbed gas or vapour concentration (V. Tsionsty et al., use of the Quartz Crystal Microbalance For Study of Adsorption From the Gas phase, Langmuir, 1994, 10, 2830-2835). (K.D. Schierbaum et al., Selective Detection of Organic Molecules with Polymers and Supramolecular Compounds: Application of Capacitance, quartz Microbalance and Calorimetric Transducers, Sensors and Actuators, A, 31(1992) 130-137). The sensor substantially works as a microbalance and the selectivity is atributed to the adsorbing material on the quartz.

*SAW (Surface Acoustic Waves*): they are gas sensors based on the perturbation induced from the absorption of chemical species on a coating deposited on a piezoelectric material. They are more sensitive than the previous sensors. (S.M. Chang et al., Development of chemical Vapur Sensor Using SAW Resonator Oscillator Incorporating Odorant Receptive L.B. Film, Biosensors & Bioelectronics 6, (1991) 293-298).

The following sensors may be furthermore cited: *microcalorimetric*, *electrochemical*, *palladium gate MOSFET* and *optical FET*.

*Conducting polymers*: they are made of a type of unique organic material, studied and used recently as sensitive element of gas or chemical species in the vapour phase, and have many other applications. These polymers are obtained from organic monomers, and in particular conditions they are electrical conductors. This property comes from a structure common to all types of these polymers, i.e. those having a structure with double π-conjugated links (alternation of double and single links so called π-conjugated) that forms a superorbital for electronic conductivity. (R.H. Baughman et al., Structural Basis for Semiconducting and Metallic Polymer/Dopant System, Chem, Rev. 1982, 82, 209-222). (Gerard Bidan, Electroconducting Conjugated Polymer: in the Sensitive Matrixs to Build up chemical or Electrochemical Sensors, to Review, Sensors and Actuators, B,6 (1992), 45-56).

The main classes of conducting polymers are: polyacetylene, the first that have been studied, polypyrrole and polythiophene that consist of polyetherocyclic aromatic rings which contain an N and S atom respectively in the ring as well as those containing a bridge ethero-atom such as polyaniline.

When the conducting polymer material is in the neutral state, that is not doped, it works as a semiconductor with a conductivity of 10⁻⁷ + 10⁻⁴ Siemens/cm.

An electronic conductivity of 10⁻⁵ S/cm results when electrons or conduction holes are put into the super orbital (doping) For electroneutrality an equal number of opposite counterions have to be put into the matrix of the conducting polymer; these can be considered as an organic polymeric salt (normally the counterions are anions and the polymeric chain is charged positively generating a conductivity of type p). The doping and the undoping are reversible redox processes that cause remarkable changes in conductivity. Typical values of doping are between 0,1 and 0,3 electrical charge units every monomeric unit.

Many chemical polymerisation methods in the presence of catalysts have been used to make conducting polymers. In particular the method used for making the sensor provides an oxidative coupling of the thiophene, pyrrole and anyline derivatives with oxidant substances. Particularly important for preparing sensor solutions is the electrochemical polymerisation because in particular experimental conditions in a single oxidation stage the monomer is obtained with the consequent production of the polymer and the simultaneous doping of the resulting polymer that adheres to the anode. This method, used by most authors, allows stable doped polymers to be obtained, since the counterions are fixed in the polymeric matrix contemporarily with its growth and can be controlled by adjusting the cell current.

Many types of sensors with varying response have been developed and specialised by varying parameters such as the solvents, the counterions and the concentration of the monomers and of the counterions. Furthermore the growing interest for these devices in the last years has promoted the synthesis of monomers, whereby now different series thereof are available, belonging to said classes or their derivatives, having many substitutes that contain one or several functional groups and with different lengths. Furthermore thermal treatments or gas and vapour treatments in order to obtain improved sensors have been set.

Most conducting polymer sensors used both for specific purposes and for making arrays of sensors used in the so called "electronic noses" or "artificial noses", which recently have been studied in the international scientific field and in some industrial fields, have been made this way.

In this connection, an apparatus has been described in WO9618888A1 comprising arrays of conducting polymer microsensors obtained by electrochemical polymerisation of monomers. (See J.V. Hatfield et al., Towards to the Integrated Electronic Nose Using Conducting Polymer Sensors. Sensor and Actuators, B, 18-19(1994) 221-228).

In EP0719411A1, Methods and Solutions For Detection of Odorous Substances And Application, another apparatus consisting in an array of mixed conducting polymers sensors and SAW is described.

In most cases, among which the two above cited, for the production of conducting polymers sensors the electrochemical polymerisation technique has been chosen. This choice is due to the difficult processing of these materials, which when doped are insoluble and infusible, as well as to the troubles that derive from polymerisation and doping with the other polymerisation methods. In particular, in the electrochemical polymerisation the oxidant is the electrical current and also in the doping step the current oxidises the polymeric chains allowing to the counterions of the electrochemical bath to enter into the polymeric matrix.

On the other hand, the easy electrochemical technique, which allows simultaneously the production of the polymeric film and its doping, has some drawbacks such as the difficulty in obtaining reproducibility of the sensors. In fact it is necessary to reduce the distances between the metallic paths of the supports down to several µm so that when the polymer grows on the metal it bridges the insulating zones by films of reduced and constant thickness in order to have reproducible performance. Furthermore washing steps are necessary for eliminating the polluting substances of the electrolytic solution as well as heating steps and/or gas adsorption steps are required for specialising the sensors and bringing them in the most favourable working range.

The need of polymerisation techniques that overcome those drawbacks is sorely felt.

For example polymerisation techniques have been experimented in vapour phase CVD (Chemical Vapour Deposition) which, on one hand have the advantage of being compatible with the microelectronics silicon technologies thus obtaining miniaturised products with standard making procedures, on the other hand they have the drawback of too complicated a polymerisation apparatus owing to the difficulty of handling of the material. In fact, the liquid monomers have a high boiling point and if solid, often melt at high temperatures and and/or dissociate before change of state to vapour phase. (E. Stussi, G. Serra et al., Fabrication of Conducting Polymer Patterns for Gas Sensing by a Dry Technique, Material Science and Engineering C4(1996) 27-33).

Alternatively, a chemical oxidative Polymerisation has been undertaken, as in EP411793A2 "Preparation of Conductive Films and their use as Gas Sensors". However, the drawbacks of insolubility of the polymers, and an unsatisfactory stability of the doping or of film deposition, with the problem of reproducibility and stability of the sensors with time have not been overcome.

Furthermore, the attempts of separate monomer solutions and oxidative salts or vice versa onto the supports, for making films of conducting polymers have failed owing to insufficient penetration of the dopant in the polymeric matrix that makes sensors unstable with time and completely irreproducible.

### Summary of the invention

The present invention arises from the need of overcoming with a new method the problem of the production of sensors for "electronic noses" in a alternative way with respect to electrochemical polymerisation. It is applicable to various classes of monomers and it obtains an industrial and competitive process for making arrays formed by differentiated, stable, reproducible and sensitive sensors.

More generally, it is the object of the present invention to provide a sensitive film for resistive sensors, such as chemi-resistors, strain gauges, etc.

It is a general characteristic of the invention, to obtain doped conducting polymers starting from neutral π-conjugated polymers, suitable for being doped in a controlled way for predetermined polymer/dopant ratio.

The controlled doping can be carried out in a liquid in which the neutral polymer and the dopant are added. The liquid is preferably a volatile substance whereby the resulting doped polymer can be sprayed on a support followed by evaporation of the liquid.

The dopant can be advantageously an oxidant, such as an oxidative salt soluble in a second solvent. Preferably the dopant is a solid substance chosen among CuCl₂, Cu(ClO₄)₂, FeCl₃, Fe(ClO₄)₃, I₂, HAuCl₄ and the second solvent is liquid, for example acetonitrile.

The conducting neutral π-conjugated polymers can have for example a p type conductivity and anionic counterions are produced by doping.

Alternatively, the dopant is a reducent substance and the conducting polymers have conductivity of type n and cationic counterions produced by doping.

The neutral polymers can be made by the following steps:
- preparing a solution of monomers;
- preparing a solution of oxidant;
- reaction between the solution of monomers and the solution of oxidant with the production of a conducting polymer having an excess of oxidant with respect to the amount of monomeric units;
- total elimination of the excess of dopant and undoping the doped polymer up to the neutral state.

Obviously, the conducting polymers can also be made by reaction of a gas bubbling in the solution of monomers or by reaction of oxidant liquid that is diluted in the solvent and added to the solution of monomers.

The monomers used for making the neutral polymers can preferably be chosen among pyrrole or thiophene monomers whereby the polymer is a polypyrrole or a polythiophene. In particular it can be a derivative of substituted thiophene, of disubstituted bithiophene or of disubstituted terthiophene.

Preferably, the neutral polymers are chosen among 3,3' or 4,4' dialkoxy dithiophene, 3,3' or 4,4' dihexyl dithiophene, 3,3' or 4,4' didodecil dithiophene, 3,3'' or 4,4'' dialkoxy terthiophene, 3,3'' or 4,4'' dihexyl terthiophene, 3,3'' or 4,4'' didodecil terthiophene soluble in a mixture of trichloroethylene/chloroform.

The resistive sensor, a chemi-resistor, according to the present invention comprises a support on which a film of conducting neutral polymers is deposited and doped by one or several salt or oxidant substances as described above. The support can comprise flat surfaces, yarns, fabrics, nets made of a conducting or insulating material into a polymeric matrix, in particular made of insulating material with conductive parts. the supports can be made of transparent material and the film deposited on them can be from 1 to 300µm thick.

The film of conducting polymers is in particular capable of adjusting its resistive characteristics in presence of gas or of volatile chemical substances, among which vapours of volatile organic substances, such as vapour of organic solvents benzene, toluene, xylene, tetrahydrophuran, thiophene, diethyl ether , hexane, chloroform, acetonitrile, hexanal.

According to the invention, then, by separating the polymerisation step and the doping step it is possible to obtain in a reproducible way the conducting polymer with the characteristics desired.

In an exemplifying description of the step of making the conducting polymer in standard conditions the following steps are provided:
- preparing a first solution of monomers in a mixture of organic solvents chosen among trichloroethylene, chloroform, methylene chloride, etc.;
- preparing a second solution of oxidative salt in acetonitrile or in other suitable solvents;
- reaction by stirring for about 12 hours at room temperature, or also up to T = 60°C, with M/Ox (Monomer/Oxidant) ratio of 1:3 or 1:4 making a stable suspension of highly doped conducting polymers whose precipitates had size <30µm.

This suspension might have already been deposited with suitable techniques onto the supports and after evaporation of the solvents a highly doped, mechanically stable and adhesive polymeric film having conductivity typical from 10⁻² Siemens/cm can be obtained.

Concerning the compatibility of the solvents used for the polymers, the amount of trichloroethylene and chloroform affects the evaporation speed and the film quality, whereas the presence of acetonitrile, necessary for dissolving the oxidative salt, worsens the adhesivity and the stability of the film on the supports.

The sensors obtained by the film as described would be already capable of having:
- clear sensitivity to vapours of organic substances, in any case comparable or higher to known electrochemical sensors,
- good mechanical and electrical stability (more than six months in the air) with good ΔR/R% response to various substances;
- good reproducibility of resistance R on the supports. In the presence of typical supports and geometries used for known chemi-resistors, the resistance R varies from 10 to 100 KΩ depending on the type of monomer and oxidative salt used.

Starting from these results, to obtain higher values of sensitivity, instead of using Mon/Ox stoichiometric ratio for polymerisation and the simultaneous doping, according to the present invention a higher Mon/Ox ratio is chosen and the unreacted salt is completely removed and undoping of the conducting polymers obtained by the reaction is carried out, thus obtaining neutral polymers. Then, a controlled doping of the neutral polymers is done.

Before the undoping step, for making the conducting polymers, the preferred Monomer/Oxidant (M/Ox) ratio provides for a certain oxidant excess (1:3, 1:4), thus achieving good film reproducibility and conductivity. In fact, using M/Ox less than 1:3, for example 1:2.1 ÷ 1:2.3, which would be about the exact amount for having polymerisation and doping, practically not conducting or insulating films and unstable or irreproducible films are obtained, wherein the attributes of the final conducting polymer film cannot be controlled. This depends on many uncontrollable parameters among which: the polymerisation yield that varies according to the M and Ox used; the polymer with unreacted salt in its matrix; the temperature of reaction; the way of adding the oxidant to the monomer and vice versa, since the speed of polymerisation and of doping are high and comparable with each other. On the other hand with a higher excess (M/Ox ≈ 1:4) the polymer is doped exceedingly by not reacted salt and has high conductivity even after washing for eliminating the salt in excess. Moreover, without the undoping step for making neutral polymers, in any case, there is no possibility of stopping at a desired intermediate doping ratio.

According to the present invention, instead, it is possible to obtain sensors, which are very sensitive to vapours, organic substances or other chemical substances, starting from neutral π-conjugated polymers soluble in trichloroethylene or other solvents or mixture, by addition of a stoichiometric dopant amount such as CuCl₂, Cu(Cl0₄)₂, Fe(Cl 0₄)₃, FeCl₃, I₂, HAuCl₄ etc., in CH₃CN or other solvents, or by gas bubbling in the solvent.

An important distinction between the method of the present invention and each of the methods described in the state of the art literature concerning chemical fabrication of electroconductive film on supports, is that they are different theoretically, in preparation procedure and in the results.

In EP0411793 A2, which is the closest process described in the state of the art, the differences are the following:
- the polypyrrole of EP0411793 A2 has been polymerised by mixing pyrrole and oxidant in water with a molar ratio pyrrole/Ox = 1:20 which is a very high excess of Ox (polymerisation stoichiometric ratio would be only M/Ox ≈ 1:2 and polymerisation + doping would require a ratio M/Ox = 1:2.1 ÷ 1:2.3). In the present invention instead, in the preferred embodiment, the doped conducting polymers are made by reaction of neutral polymers + oxidant dissolved in organic solvents with a molar ratio M/Ox between 1:0,16 and 1:0,023 (M = monomeric units in neutral polymer P).
- The deposition of polypyrrole film in EP0411793A2 onto the supports has been made by a bath in the reactor whereas, according to the invention, the polymer film is laid onto the supports by screen printing, or by spray techniques, or by ink jet printing etc.
- The method described in EPO411793A2 provides the deposition of polypyrrole by pyrrole polymerisation through oxidative agents, whereas the present invention generally relates to doping neutral soluble polymers of various classes, such as thiophene, pyrrole etc. derivatives, wherein the insoluble neutral polymers may be in powder form, wherein polymers are composed of n type conductivity and cationic counterions doped by reducing agents, and wherein sensitivity can be extended and/or differentiated with respect to many vapour substances.

Finally, the need of carrying out heating and washing common to all the methods described in the state of the art literature after having prepared the film by immersion of the support in a bath (without any assurance on the reproducibility of the film characteristics), is avoided with the method according to the invention that allows one to obtain reproducible sensors, ready to use, in a more rapid, flexible and simple way.

The neutral polymers used in the preferred embodiment are of the types 3,3' or 4,4' dialkoxy bithiophene or dialkyl bithiophene or terthiophene, prepared according to the method described in literature having conductivity <10⁻⁷ S/cm. (M.C. Gallazzi et al., Regiodefined Substituted Poly-2,5-Thienylene/s Journal of Polymer Science. Part A: Polymer Chemistry, Vol. 31, 3339 - 3349 (1993)). (G. Zotti et al., Conducting Polymer By anodic coupling of Some Regiochemically Defined Dialkoxysubstituted Thiophene Oligomers Synt. Met. 31/1/95).

In the experimental cases oxidant has been added to said diluted salt at room temperature under strong stirring for 30', but owing to the high speed of reaction the doped product of reaction would have been immediately available. The resulting reacted product is highly adhesive after the solvent has dried, whereby the deposition on insulating supports of the metal pattern is made easier with respect to the prior art methods.

The final doped product according to the invention has been laid onto the supports by laboratory techniques, but it can be carried out industrially by masking the supports and vaporisation or spray techniques, or with screen printing.

The amount of added oxidant determines the sensor working point and is variable according to the chosen polymer between 1 mole of oxidant for 6 moles of monomeric units up to 1 mole for 50 moles of monomeric units or more.

The doped films once dried onto the experimental supports showed a resistance of 0,5 to 2,5 MΩ according to the polymer thickness and a blackish colour with metal green or red metal tints.

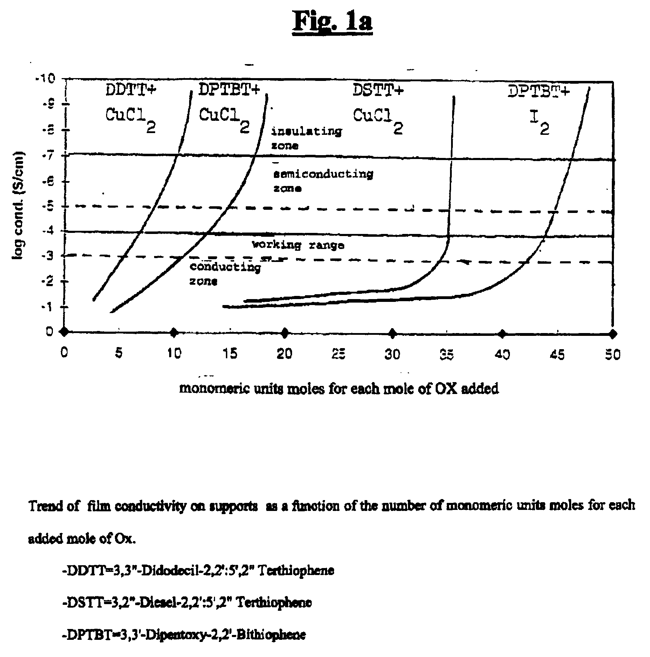

It is to be noted that the film deposited from solutions of neutral polymers is dark brown without metal tints and the film deposited from doped polymers with 1 Ox every 3 monomeric units is black without metal tints and a resistance R of 2-100KΩ. This phenomenon can be explained by the specific doping curve peculiar for each polymer, such as the semi-quantitative pseudo-titration curves of fig. 1a.

These curves can be obtained by testing the solution after every addition of oxidant, then measuring the film electrical resistance on the supports, and then calculating the theoretical electrical conductivity from the geometry.

Always with reference to figure 1a, i.e, DSTT curve of CuCl₂, in case of very diluted solution the addition of even a very small quantity of dopant would be critical for bringing quickly the film from insulating towards good conducting properties. In any case, also choosing the correct working point, the film resistance would be not stable with time, increasing itself perhaps owing to direct oxidation of the air oxygen. In the other cases the slope of the curve is less high whereby the resistance remains in the working range for months or it drifts slowly without prejudice for good operative behaviour of the sensor.

Sensors with too high resistance have clearly problems at the signal measure, whereas sensors with resistance too low have low sensitivity as well. In this connection the latter sensors are similar to those obtained from monomers with high M/Ox ratio described above and the low sensitivity is due to the curve trend in the conductivity zone.

Normally, the compromise position between sensitivity and resistance is the working zone comprised between the conductivity and the semi-conductivity zones, i.e. the zone between conductivity 10⁻³+10⁻⁵ Siemens/cm, as indicated between the two dotted lines of figure 1a. However, sometimes working zones under (low sensitivity) or above (high sensitivity) the optimal zone could be chosen.

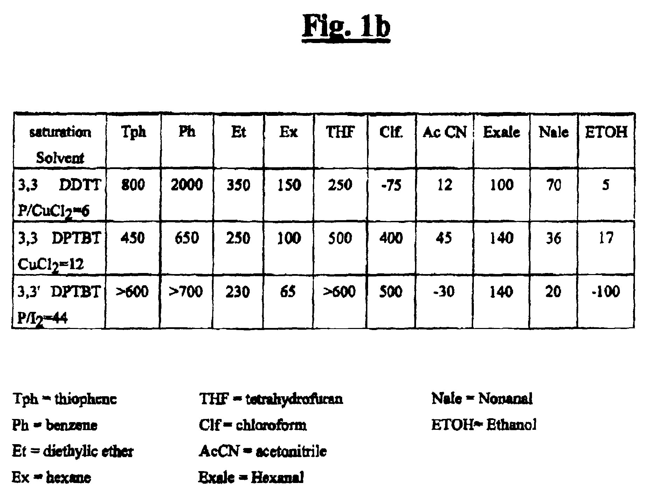

Measures of ΔR/R% carried out on three high sensitivity sensors (above the dotted lines) made of polymers according to the present invention immersed in organic saturated vapour have given the results shown in the table of figure 1b. The response time is about a few seconds or even less and the response versus variation of electrical resistance is, in the worst case, totally reversible in 30-40 seconds.

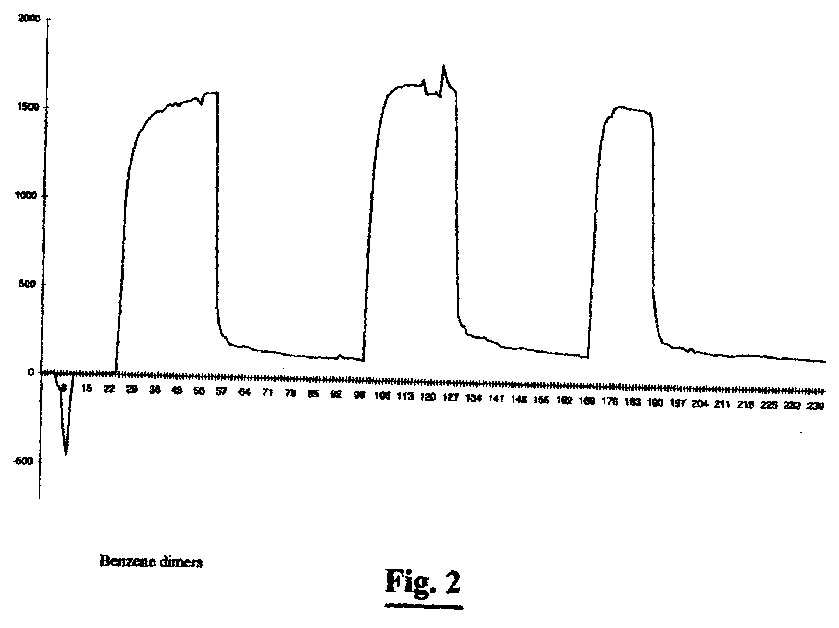

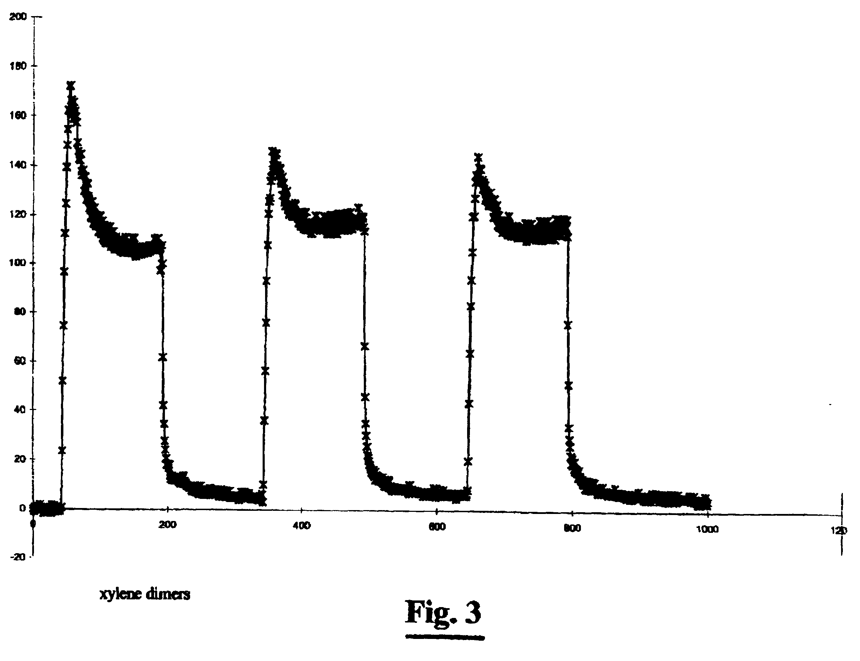

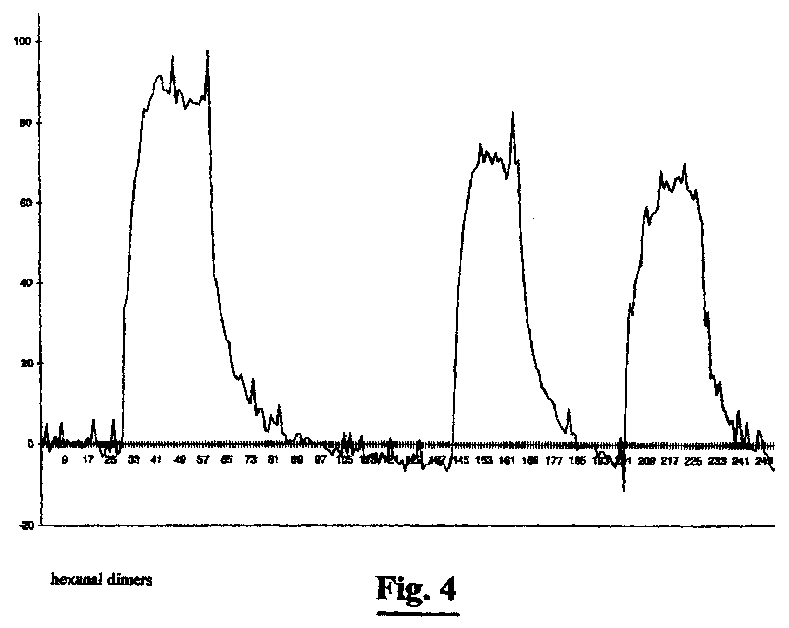

In figures 2, 3 and 4 exemplifying diagrams are shown of the response ΔR/R% versus time of response (s) of a sensor made by DDTT and CuCl₂ (like figure 1a) and then exposed to saturated benzene, xylene and hexanal vapour.

The method for fabricating sensors according to the invention is quick and allows the production of sensitive reproducible elements in a simple and inexpensive way which is easily industrially applicable. Reproducibility of sensors is due to the reaction between neutral polymers and dopant which is carried out almost in homogeneous phase (the addition of little amount of dopant to diluted solutions increases reproducibility of the process contrarily to the high dopant excess described in prior literature), the doping forming sometimes very thin colloidal aggregates (these products have not yet been identified). Moreover, in many cases, sensors obtained increasing the time of reaction up to 24 hours are progressively more stable with time versus variation of electrical resistance.

The product of reaction in any case behaves like a fluid and can be sprayed onto the supports with known mass production industrial processes or can be printed thereon by screen printing or the like.

This process is also suitable for miniaturisation of sensors arrays up to dimensions comparable to those obtained with electrochemical polymerisation.

The following are six examples of doping cf conducting polymers starting from neutral polymers according to the invention.

### EXAMPLE 1

12,5 mg of neutral poly-3,3''-Didocecil-2,2':5',2''-Terthiophene, or 3,3''-DDTT, (2.14x10⁻⁵ moles of monomeric units prepared according to the GALLAZZI et al.) have been dissolved in about 3 ml of trichloroethylene and to this solution droplet by droplet under strong stirring 0.5 ml have been added of a solution of CuCl2-2H20 in CH3CN 1.2 mg/ml (3,5x10-6 moles) equal to a molar ratio P/Ox = 6,1.

The mixture has been left reacting at room temperature for 30 minutes and then 3 little droplets thereof have been drawn off and deposited onto each support (1 droplet ≈ 0,015 ml) leaving every time the solvent to evaporate thus obtaining a circular deposition of about 4 mm of diameter and thickness ≈ 200µm that has shown a resistance of about 1MΩ (σ ≈ 10⁻⁴ S/cm).

### EXAMPLE 2

15mg of neutral poly-3,3'-Dipentoxy-2,2' Bithiophene or 3,3'-DPTBT (4,46x10⁻⁵ moles of monomeric units prepared according to the GALLAZZI et al.) have been dissolved in about 3 ml of trichloroethylene and to this solution droplet by droplet under strong stirring 0,5 ml have been added of a solution of CuCl₂-2H₂0 in CH₃CN 1.2mg/ml (3,5 x 10⁻⁶ moles) equal to a molar ratio P/Ox = 12,7.

Following the procedure of example 1 a sensor has been obtained with similar resistance and conductivity.

### EXAMPLE 3

15mg of neutral poly-3,3''-Dihexyl-2,2';5,2''-Terthiophene or 3,3''-DSTT (3,6-10⁻⁵ moles of monomeric units prepared according to the method GALLAZZI et al.) have been dissolved in about 3ml of trichloroethylene and to this solution droplet by droplet under strong stirring 0.5ml have been added of a solution of Cu Cl₂-2H₂0 in CH₃CN 3.6 10⁻⁴mg/ml (1,1x10⁻⁶ moles) equal to a molar ratio P/Ox = 34,3.

Following the procedure of examples 1 and 2 films have been obtained with similar resistance and conductivity, but a quick drift has been observed of the resistance towards very high values (see specific curves).

### EXAMPLE 4

16,5mg of neutral poly-3.3'-Dipentoxy-2,2'-Bithiophene or 3,3'-DPTBT (4,41x10⁻⁵ moles of monomeric units) have been dissolved in about 3ml of trichloroethylene and to this solution droplet by droplet under strong stirring 0,5 ml have been added of a solution of I₂ in CH₃ CN 0.6mg/ml (1,1x10⁻⁶ moles) equal to a molar ratio P/Ox = 44,6.

### EXAMPLE 5

10 mg of poly-4,4'-Dipentoxy-2,2' bithiophene or 4,4'-DPTBT corresponding to 2,97x10⁻⁵ moles of monomeric units (prepared according to the method GALLAZZI et al.) in powdered form (particles diameter < 30 µm) have been suspended in about 1,5 ml of trichloroethylene and to this suspension droplet by droplet 0,2 ml have been added of a solution of Fe(ClO₄)₃x9H₂O in CH₃CN 19,1 mg/ml(2,97x10⁻⁶ moles) equal to a molar ratio M/Ox=4. After 24 hours, following a procedure similar to that described in example 1, a sensor has been obtained stable with time versus ΔR/R% with resistance of about 10Ω (σ ∼10 Siemens/cm).

In this example, the resistive film has low sensitivity and is obtained from powdered not soluble neutral dithiophene terthiophene disubstituted polymers. The insoluble neutral polymers have been obtained for oxidative polymerisation of monomers similar to those necessary for obtaining soluble polymers but with the substitutes in another position, in order to provide a higher speed of polymerisation and then a higher polymer molecular weight that causes insolubility. In this case, the similar soluble polymer is 3,3'-DPTBT described in example 2.

Similar results derived from other oxidative salts above described. Furthermore, this reaction is possible also using another neutral polymer insoluble, 4,4''-DPTT.

### EXAMPLE 6

10mg of Dimethyl-pyrrole-3,4-diacetate monomer (4,73x10-5 moles) have been dissolved in about 1ml of methylene chloride and to this solution droplet by droplet under strong stirring about 0,5 ml have been added of a solution of Fe(ClO4)3x9H2O in CH3CN 200mg/ml (1,94x10-4 moles) according to Ox/M=4 ratio(M/Ox=0,25). After 24 hours of reaction the obtained suspension has been washed in demineralized H₂O for eliminating the excess of salt not reacted, obtaining a polymer which has been used as described in example 1 to provide a sensor that is particularly sensitive to olive oil showing a resistance onto the supports of about 10KΩ (s ∼10 Siemens/cm).

Other dipyrrole 3,4 disubstituted monomer can be synthesised and used to make sensors.

The foregoing description of the specific embodiments will so fully reveal the general nature of the invention that others can, by applying current knowledge, readily modify and/or adapt for various applications such specific embodiments without undue experimentation and without departing from the generic concept, and, therefore, such adaptations and modifications should and are intended to be comprehended within the meaning and range of equivalent of the disclosed embodiments. The means and material for carrying out various disclosed functions may take to variety of alternative forms without departing from the invention. It is to be understood that the phraseology or terminology employed herein is for purpose of description and not of limitation.

## Claims

1. A process for preparing a sensitive film for making resistive sensors, said film being composed by conducting polymers doped by at least a dopant, characterised in that it comprises the steps of:
- introduction of a π-conjugated neutral polymer in at least a liquid;
- addition of dopant in said liquid for a controlled doping of said neutral polymer up to a chosen Polymer/Dopant ratio.

2. A process according to claim 2 wherein said dopant is chosen between:
- an oxidative agent;
- a soluble oxidative salt in a first solvent, said dopant, through said solvent, being added to said liquid wherein said polymer is present;
- CuCl₂; Cu(ClO₄)₂; FeCl₃; Fe(ClO₄)₃; HAuCl₄; I₂;

3. A process according to claim 2 wherein said first solvent is acetonitrile.

4. Process according to the previous claims, wherein said dopant is dissolved in said first solvent for doping said neutral polymers with molar ratio M/Ox comprised between 1:0.16 and 1:0.023 for making high sensitivity conducting polymers.

5. Process according to claims from 1 to 3, wherein said dopant is dissolved in said first solvent for doping said neutral polymers with molar ratio M/Ox comprised between 1:0.4 and 1:0.16 for preparing low sensitivity polymers.

6. Process according claims from 1 to 3, wherein said dopant is dissolved in said first solvent for doping said neutral polymers with molar ratio M/Ox for making conducting polymers with conductivity 10⁻² + 10⁻⁵ S/cm.

7. Process according to claims from 1 to 3, wherein said dopant is dissolved in said solvent for doping said neutral polymers with molar ratio M/Ox according to a suitable high slope working point of a pseudo-titration curve (fig. 1a).

8. A process according to claim 1 wherein said dopant is a reducent substance.

9. Process according to claim 8 wherein said conducting polymers have conductivity of n type and cationic counterions produced by doping.

10. Process according to the previous claims, wherein neutral polymers are chosen between: pyrrole polymers; thiophene polymers; derivatives of substituted thiophene; derivatives of disubstituted bithiophene; derivatives of disubstituted terthiophene; 3,3' or 4,4' dialkoxy dithiophene; 3,3' or 4,4' dihexyldithiophene; 3,3' or 4,4' didodecil dithiophene; 3,3'' or 4,4'' dialkoxy terthiophene; 3,3'' or 4,4'' dihexyl terthiophene; 3,3'' or 4,4'' didodecil terthiophene soluble in a trichloroethylene/chloroform mixture.

11. Process according to the previous claims, wherein the preparation of said neutral polymer comprises the steps of:
- preparing a solution of monomers;
- preparing a solution of oxidant;
- reaction of said solution of monomers and said solution of oxidant obtaining said conducting polymer having an excess of oxidant or reducent w.r.t. the used monomeric units;
- total elimination of the oxidant excess and undoping the conducting polymer up to the neutral state.

12. A process according to claim 11 wherein said reaction of said solution of monomers and said solution of oxidant for preparing said conducting polymers is carried out with molar ratio of monomer/oxidant M/Ox 1:3-1:4.

13. Resistive sensor comprising a support on which is deposited a film of conducting polymers doped by one or several oxidative salt according to the previous claims, characterised in that said supports are consisting in flat surfaces, yarns, fabrics, nets made of a conducting or insulating material into a polymeric matrix.

14. Sensor according to claim 13 wherein said polymers are chosen among 3,3' or 4,4' dialkoxy dithiophene, 3,3' or 4,4' dihexyl dithiophene, 3,3' or 4,4' didodecil dithiophene, 3,3'' or 4,4'' dialkoxy terthiophene, 3,3'' or 4,4'' dihexyl terthiophene or 3,3'' or 4,4'' didodecil terthiophene soluble in mixture trichloroethylene/chloroform.

15. Sensor according to claim 13 wherein said supports consist in material chosen among insulating material with conductive parts or transparent material.

16. A sensor according to claim 17 wherein said film is thick from 1 to 300µm.

17. A sensor according to claim 17 wherein said polymer is laid down onto the supports by screen printing, by spray technique, by ink jet printing.

18. A sensor according to claim 17 wherein said film of conducting polymers is sensitive to substances chosen among volatile chemical substances, vapour of organic substances volatile, vapour of organic solvents, benzene, toluene, xylene, tetrahydrofurano, thiophene, diethyl ether , hexane, chloroform, acetonitrile, hexanal.
